# FASCICULE DE BREVET EUROPEEN

(11) **EP 2 440 435 B1**
(45) Date de publication et mention de la délivrance du brevet: **29.07.2015**
(21) Numéro de dépôt: 10734201.6
(22) Date de dépôt: 01.06.2010
(51) Int. Cl.: B60R 22/195

(54) **PRETENSIONNEUR DE CEINTURE DE SECURITE**
SITZGURTVORSPANNER
SEAT BELT PRETENSIONER

(30) Priorité: 09.06.2009 FR 0953816
(43) Date de publication de la demande: 18.04.2012
(73) Titulaire: Renault S.A.S., 78288 Guyancourt Cedex (FR)
(72) Inventeur: BERNASCONI, Jérémy, F-75015 Paris (FR); LABREVOIS, Philippe, F-27810 Marcilly Sur Eure (FR); MAKALA, Jérôme, F-78280 Guyancourt (FR)
(86) Numéro de dépôt international: PCT/FR2010/051060
(87) Numéro de publication internationale: WO 2010/142885

(56) Documents cités:
- WO-A2-2006/014829
- FR-A1- 2 855 126
- FR-A1- 2 862 033
- FR-A1- 2 886 249
- US-A1- 2006 208 124

## Description

L'invention concerne le domaine des prétensionneurs de ceinture de sécurité de véhicule automobile, destinés à se déclencher lors d'une décélération brutale du véhicule ou lors d'un choc.

Les ceintures de sécurité sont souvent équipées d'enrouleurs permettant au passager de tirer à lui la sangle de sécurité. Le passager peut alors encliqueter la boucle d'attache de la ceinture dans une mâchoire située à l'extrémité d'un pédoncule sur un côté du siège. La traction exercée par les enrouleurs est réduite, de manière à conserver un confort d'usage au passager. En cas d'accident, la sangle de ceinture de sécurité peut n'être pas plaquée contre le passager. Lors d'un accident, le passager risque de s'engouffrer sous la sangle ventrale et subir des lésions importantes au niveau de l'abdomen. Ce phénomène est connu sous le nom de « sous marinage ».

Des prétensionneurs ont été développés pour que, au moment de l'accident, la ceinture soit brutalement tendue afin de plaquer le passager sur son siège. Cela évite le phénomène de sous marinage. Le document US 6 446 897 décrit un système de ceinture de siège équipé d'un système pyrotechnique d'entraînement d'un arbre d'enroulement.

Le document WO 2007/045 391 décrit un prétensionneur mécanique disposé sur la sangle de la mâchoire d'accrochage de la boucle de la ceinture.

Le document FR 2 661 137 décrit un dispositif de traction de boucle pour ceinture de sécurité. Le pédoncule supportant la mâchoire de réception de la boucle de fixation se rétrécit sous l'action d'un mécanisme de traction.

Dans les deux mécanismes précédents, la traction supplémentaire au moment de l'accident est transmise à la boucle d'attache de la ceinture. La sangle passant au dessus de l'épaule est alors tirée en même temps que la sangle ventrale. Un inconvénient de ce type de prétensionneur est que l'effet de prétension est partagé entre la sangle de buste et la sangle ventrale. L'effet anti-sous marinage de ce type de prétensionneur peut être insuffisant.

Le document US 2006/0 208 124 décrit un dispositif de traction double disposé sur une portion verticale de la ceinture de sécurité. Le dispositif est fixé sur le pilier latéral de la carrosserie du véhicule situé entre les sièges avant et arrière. Un inconvénient de ce type de système est que son implantation dans le véhicule est dédiée à des véhicules cinq portes, dans lesquels le pilier latéral du véhicule se trouve juste à proximité du dossier du conducteur. Dans les véhicules trois portes, le pilier latéral est décalé vers l'arrière du véhicule pour permettre l'entrée des passagers arrière. Le système de traction décrit ne convient pas pour des véhicule trois portes.

L'invention vise à remédier aux inconvénients précités. Un but de l'invention est de proposer un prétensionneur plus efficace pour tendre la sangle ventrale tout en convenant aux véhicules trois portes et cinq portes.

Selon un mode de réalisation, le prétensionneur pour ceinture de sécurité de véhicule automobile comprend une portion, de sangle, un moyen d'enroulement de la portion de sangle autour d'un arbre d'enroulement et un générateur commandable d'impulsion de rotation de l'arbre d'enroulement. Ladite portion de sangle est une portion d'extrémité d'une sangle ventrale de la ceinture de sécurité à prétensionner. Le prétensionneur comprend une tige de guidage, un moyen d'immobilisation en translation de la tige de guidage par rapport au véhicule et un moyen de guidage en translation de ladite portion d'extrémité de la sangle ventrale le long de la tige de guidage. Ledit moyen de guidage en translation est apte à limiter la distance radiale séparant la tige de guidage de la portion d'extrémité de la sangle ventrale lorsque le générateur d'impulsion de rotation n'est pas activé.

La tige de guidage est de préférence une tige sensiblement parallèle à l'axe longitudinal du véhicule, c'est-à-dire formant avec ledit axe un angle inférieur à 30° et de préférence inférieur à 15°.

Autrement dit, la tige, immobilisée en translation par rapport au véhicule, est soit fixée au véhicule, soit mobile en rotation par rapport à un axe coaxial ou sensiblement parallèle à la tige. Le moyen de guidage en translation est apte à limiter le déplacement de la tige par rapport au véhicule selon une direction transversale à la direction d'avancement du véhicule. Les efforts de traction de la sangle ventrale engendrés par l'impulsion de rotation sont transmis au véhicule via le moyen de guidage en translation de ladite portion de sangle le long de la tige et via le moyen d'immobilisation en translation de la tige.

Le point d'application de l'effort de traction de prétensionnement peut se déplacer vers une extrémité avant de la tige de guidage. Avantageusement, l'extrémité avant de la tige de guidage est en regard du bassin de l'occupant d'un siège avant du véhicule. Avantageusement, l'extrémité arrière de la tige de guidage est située au voisinage du pilier latéral du véhicule entre les sièges avant et arrière. Grâce au moyen de guidage en translation de la portion de sangle par rapport à la tige, les passagers arrière d'un véhicule trois portes peuvent faire glisser la portion d'extrémité de la sangle ventrale vers l'extrémité arrière de la tige et libérer de l'espace pour faciliter leur entrée dans le véhicule ainsi que leur sortie.

Avantageusement, le générateur commandable d'impulsion de rotation comprend une unité de commande et un dispositif pyrotechnique d'entraînement en rotation.

Selon une première variante, le générateur commandable d'impulsion de rotation est mobile par rapport au véhicule. Cela permet au générateur d'être directement en prise avec l'arbre d'enroulement. Cela réduit la masse à entraîner par lé générateur d'impulsion de rotation.

Avantageusement, le prétensionneur comprend une bague de guidage mobile en translation le long de la tige de guidage et un moyen d'immobilisation en translation de l'arbre d'enroulement par rapport à la bague de guidage.

Avantageusement, le moyen d'immobilisation en translation de l'arbre comprend un support, solidaire de la bague de guidage dans lequel est monté à rotation l'arbre d'enroulement. L'ensemble mobile constitué par la bague de guidage, par le support, l'arbre d'enroulement et le moyen de fixation de la zone d'attache de la sangle constitue un moyen de guidage en translation de la portion de sangle le long de la tige de guidage. La solidarisation du support à la bague de guidage fait que ledit ensemble est apte à limiter la distance radiale séparant la tige de guidage de la portion d'extrémité de la sangle ventrale, lorsque le générateur d'impulsion de rotation n'est pas activé.

Selon un mode de réalisation, la bague de guidage est libre en rotation autour de la tige de guidage.

Avantageusement, le prétensionneur comprend un support dans lequel est monté à rotation l'arbre d'enroulement. Ledit support est lui-même monté à rotation sur des ergots latéraux de la bague de guidage. Quelle que soit la direction de la portion de sangle par rapport à celle de la tige de guidage, l'effort de traction de prétensionnement est directement transmis de l'arbre d'enroulement à la tige de guidage via le moyen d'immobilisation en translation de l'arbre par rapport à la bague et via le moyen de guidage en rotation de l'arbre autour dudit axe perpendiculaire et sécant à la tige de guidage.

Selon un mode de réalisation, la tige de guidage est fixe par rapport au véhicule et présente des cannelures longitudinales coopérant avec des formes correspondantes de la bague de guidage. Cela permet de mieux maîtriser la position du générateur d'impulsion de rotation. L'arbre d'enroulement peut être parallèle à la tige de guidage ou à la direction longitudinale du véhicule.

Selon une deuxième variante, le générateur commandable d'impulsion de rotation est fixe par rapport au véhicule. Cette variante présente l'avantage d'éviter des fils d'alimentation flottants entre le véhicule et l'unité de commande et/ou le générateur d'impulsion de rotation.

Selon un mode de réalisation, le prétensionneur comprend un moyen de crantage disposé en extrémité de l'arbre d'enroulement, apte à s'accoupler avec le générateur d'impulsion de rotation lorsque la bague de guidage est située à une extrémité avant de la tige de guidage. Cela facilite le retour de la ceinture en position arrière après un accident. Cela facilite l'extraction des occupants du véhicule.

Selon un mode de réalisation, le prétensionneur comprend un ensemble monobloc de deux tiges de guidage parallèles, et une bague d'accrochage de la portion d'extrémité de la sangle ventrale, la bague d'accrochage coulissant le long dudit ensemble. Le prétensionneur est ainsi apte à entraîner en rotation la portion d'extrémité de la sangle quelle que soit la position de la sangle le long de la tige. Par ailleurs, la bague d'accrochage peut avoir un diamètre relativement important. Cela réduit le nombre de tours requis pour le prétensionnement.

Avantageusement, la tige de guidage est montée à rotation sur des paliers fixés au véhicule, la tige de guidage étant entraînée en rotation par le générateur d'impulsion de rotation, la portion d'extrémité de la sangle ventrale présentant une boucle apte à coulisser latéralement le long de la tige de guidage.

Selon un mode de réalisation, le prétensionneur comprend un doigt d'enroulement s'étendant parallèlement à la tige de guidage et fixé à une extrémité avant de ladite tige de guidage. Un tel prétentionneur est simple, peu volumineux, léger et bon marché.

Selon un mode de réalisation, le prétensionneur comprend une tige d'enroulement fixée à la tige de guidage et s'étendant parallèlement à la tige de guidage sur toute la course de coulissement de la boucle de la sangle ventrale le long de la tige de guidage.

Selon un autre aspect, l'invention porte sur un système de ceinture de sécurité comprenant un prétensionneur précité et un enrouleur fixé au véhicule destiné à enrouler l'extrémité de la ceinture de sécurité opposé à ladite extrémité de la sangle ventrale de la ceinture.

D'autres caractéristiques et avantages de l'invention apparaîtront à la lecture de la description détaillée de quelques modes de réalisation pris à titre d'exemples non limitatifs et illustrés par le dessin annexé, sur lequel :
- la figure 1 est un schéma illustrant un véhicule trois portes équipé d'un prétensionneur lorsque la ceinture de sécurité est installée sur l'occupant d'un siège avant ;
- la figure 2 est un schéma illustrant un véhicule trois portes équipé du même prétensionneur lorsque la ceinture de sécurité est libre ;
- la figure 3 est une vue latérale d'un premier mode de réalisation de prétensionneur ;
- la figure 4 est un schéma fonctionnel illustrant le premier mode de réalisation ;
- la figure 5 est un schéma fonctionnel illustrant un deuxième mode de réalisation ;
- la figure 6 est un schéma fonctionnel illustrant un troisième mode de réalisation ;
- la figure 7 est schéma fonctionnel illustrant un quatrième mode de réalisation ;
- les figures 8, 8a, 8b illustrent un cinquième mode de réalisation ; et
- les figures 9 et 9a illustrent un sixième mode de réalisation.

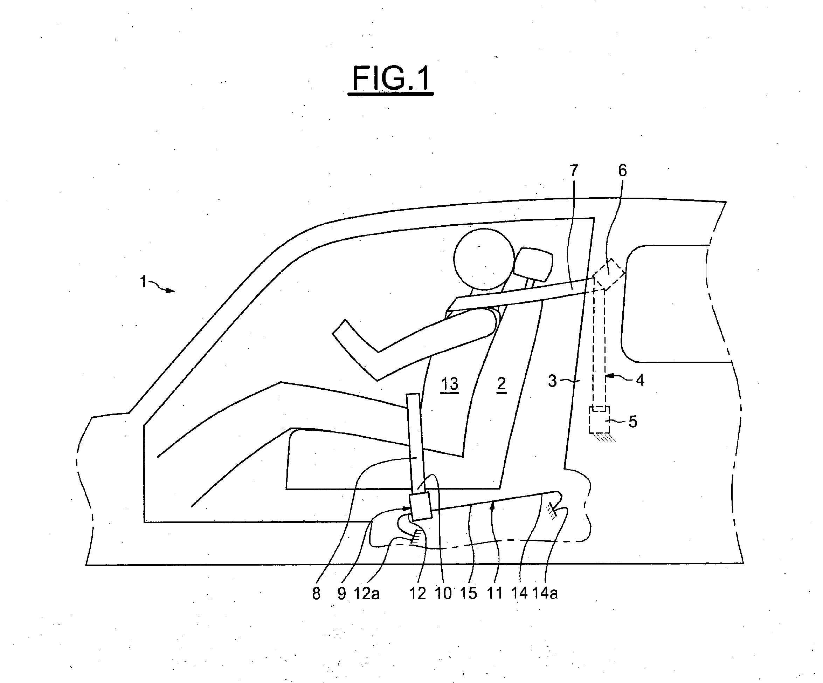

Comme illustré sur la figure 1, le véhicule 1 comprend un siège avant 2 et un pilier latéral 3 situé entre le siège avant 2 et un siège arrière non visible. Un système de ceinture de sécurité 4 comprend un enrouleur traditionnel 5 fixé au véhicule, une boucle de renvoi 6 fixée en partie supérieure du pilier latéral 3, une sangle de buste ou baudrier 7 passant au dessus de l'épaule du passager, une sangle ventrale 8 et un prétensionneur 9.

Le prétensionneur 9 comprend une portion d'extrémité 10 de la sangle ventrale 8 et une tige de guidage 11 orientée dans un plan longitudinal vertical du véhicule correspondant au plan de là figure 1, selon une direction passant par la portion inférieure du pilier latéral 3 et suivant le côté du siège avant 2. La tige de guidage 11 présente une extrémité avant 12 dont la position longitudinale est sensiblement en regard d'un mannequin de référence 13 assis sur le siège avant 2. La tige de guidage 11 présente également une extrémité arrière 14 dont la position longitudinale est en regard du pilier latéral 3. La tige de guidage 11 présente une portion sensiblement rectiligne 15 s'étendant entre les extrémités avant et arrière 12, 14 et présentant un angle par rapport à l'horizontal inférieur à 30°, de préférence inférieur à 20° et en particulier compris entre 8 et 12°. L'extrémité avant 12 est plus basse que l'extrémité arrière 14.

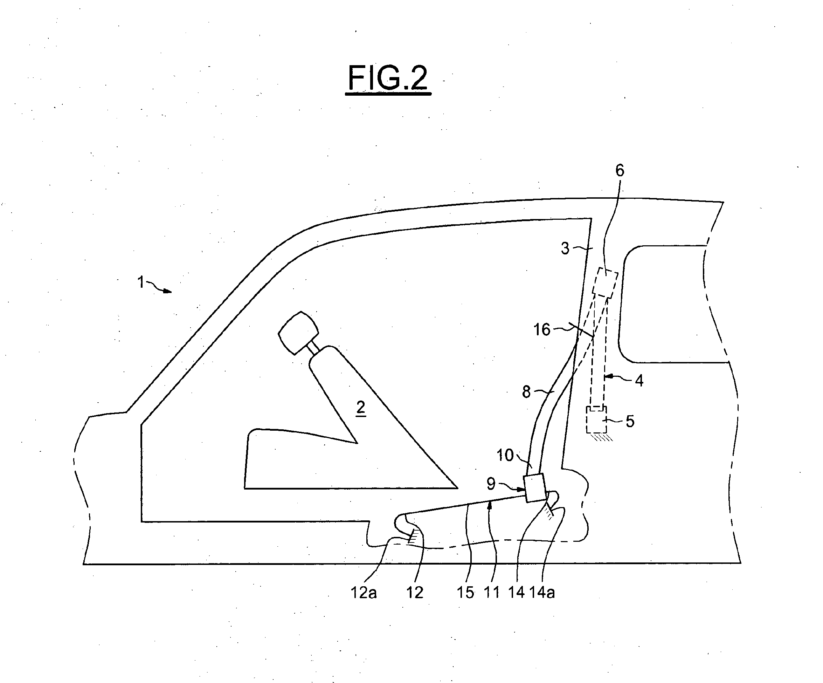

Comme illustré sur la figure 2, le siège avant 2 est en position repliée et décalé vers l'avant du véhicule 1, de manière à faciliter l'accès d'un passager vers les sièges arrière non illustrés du véhicule. Le système de ceinture de sécurité 4 est en configuration repliée. Une boucle d'attache 16 située le long de la ceinture de sécurité entre la sangle ventrale 8 et le baudrier 7, est remontée vers le haut à proximité de la boucle de renvoi 6. La surlongueur de ceinture de sécurité est absorbée par l'enrouleur 5. L'effort de traction exercé par l'enrouleur 5 sur les sangles 7 et 8 du système de ceinture de sécurité 4 tire sur le prétensionneur 9 qui remonte naturellement vers l'extrémité arrière 14 en raison de l'inclinaison de la portion rectiligne 15 de la tige de guidage 11.

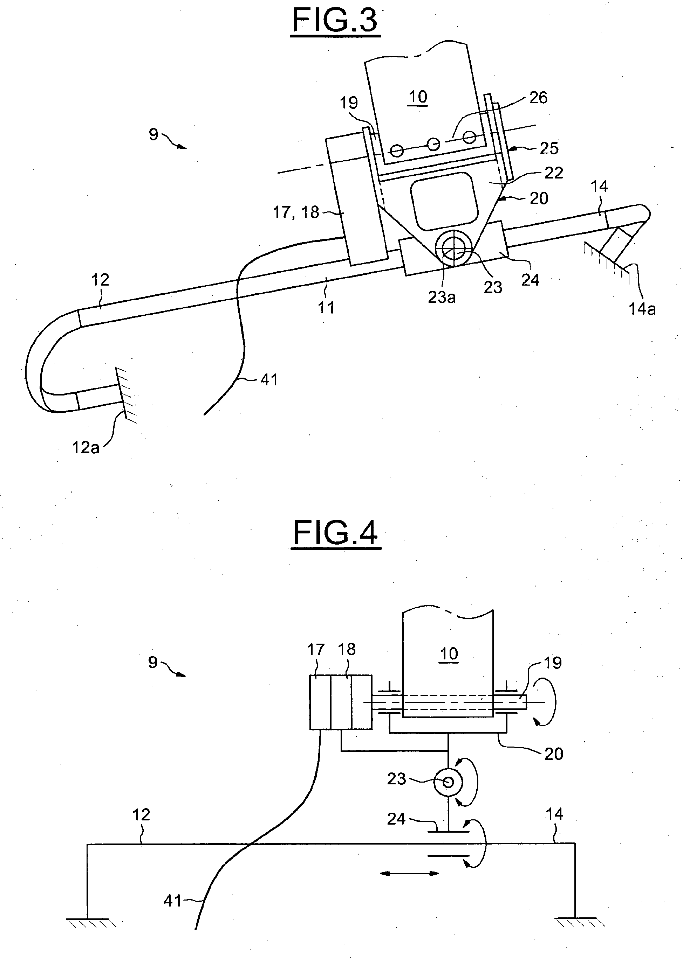

Comme illustré aux figures 3 et 4, le premier mode de réalisation du prétensionneur 9 comprend un sous ensemble 25 monté à rotation sur des ergots latéraux 23 d'une bague de guidage 24 elle-même mobile en translation et en rotation autour et le long de la tige de guidage 11. Les ergots latéraux 23 définissent un axe de rotation du sous ensemble 25 autour d'un axe sécant et perpendiculaire à la tige de guidage 11. Le sous ensemble 25 comprend une unité de commande 17, un générateur d'impulsion de rotation 18 commandé par l'unité 17, un arbre d'entraînement 19 de la portion 10 d'extrémité de la sangle ventrale 8 et un support 20. Le générateur d'impulsion de rotation 18 est disposé à une extrémité avant de l'arbre d'entraînement 19.

Le générateur d'impulsion de rotation 18 peut comprendre un dispositif pyrotechnique tel que décrit dans la demande US2006/0208124. Un piston mu par une impulsion de compression d'un gaz, pousse une crémaillère entraînant une roue dentée. Le générateur de rotation peut être également du type de celui décrit dans le brevet US 6 446 897 où un système pyrotechnique à gaz pousse une rangée de billes. Le générateur commandable d'impulsion de rotation peut être un générateur mécanique basé sur la détente brutale d'un ressort précomprimé.

L'arbre d'entraînement 19 est monté à rotation dans deux alésages situés d'un côté avant et d'un côté arrière du support 20. Le support comprend également deux flancs latéraux 22 s'étendant selon des plans parallèles à la tige de guidage 11, recevant en rotation les ergots latéraux 23. Le support 20 définit la distance entre l'axe 23a de rotation du sous ensemble 25 autour des ergots latéraux de la bague de guidage 24 et l'axe de rotation de l'arbre d'entraînement 19. La portion d'extrémité 10 de la sangle ventrale 8 présente une zone d'attache 26 fixée à une arête longitudinale de l'arbre d'entraînement 19.

Avantageusement, l'arbre d'entraînement 19 est perpendiculaire à l'axe de rotation 23a.

On va maintenant décrire le fonctionnement d'un tel prétensionneur 9. Lorsque l'occupant du siège avant 2 tire sur la boucle d'attache 16 et attache cette dernière sur un pédoncule d'attache non illustré, situé du côté du siège 2 opposé à la tige de guidage 11, la traction manuelle sur la sangle ventrale 8 entraîne le sous ensemble 25 vers l'extrémité avant 12 de la tige de guidage 11. Les degrés de liberté de la bague de guidage 24 le long et autour de la tige de guidage 11 permettent au sous ensemble 25 de rester aligné avec la portion d'extrémité 10 de la sangle ventrale 8.

En cas d'accident, le générateur d'impulsion de rotation 18 provoque la rotation de l'arbre d'entraînement 19. La portion d'extrémité 10 de la sangle ventrale 8 s'enroule autour de l'arbre d'entraînement 19. L'impulsion de rotation générée par le dispositif pyrotechnique 18 provoque une traction soudaine supplémentaire assurant le prétensionnement de la sangle ventrale 8 sans que cet effort de prétensionnement ait à être transmis par le baudrier 7. Le fait que le prétensionneur 9 soit situé directement sur une portion de la sangle ventrale 8 permet de tendre cette dernière de manière indépendante de la tension du baudrier 7. Cela permet un prétensionnement rapide et efficace permettant de lutter de manière optimale contre le phénomène de sous marinage.

Les extrémités avant 12 et arrière 14 de la tige de guidage 11 sont fixées rigidement au châssis. Cette fixation rigide immobilise la tige de guidage par rapport au véhicule.

La bague de guidage 24, le support 20 et la zone d'attache 26 constituent un moyen de guidage en translation de la portion d'extrémité 10 le long de la tige de guidage 11. Bien que la portion d'extrémité puisse aussi pivoter autour de la tige de guidage 11 et autour de l'axe 23a, la rigidité du support 22 fait que le moyen de guidage en translation 24-20-26 est apte à limiter la distance radiale séparant la tige de guidage 11 de la position d'extrémité 10 de la sangle verticale lorsque le générateur d'impulsion 18 n'est pas actionné.

L'arbre d'enroulement 19 ne peut que pivoter autour de son axe et autour de l'axe 23a. Donc le support 20 et les ergots 23 constituent un moyen 20-23 d'immobilisation en translation de l'arbre d'enroulement 19 par rapport à la bague de guidage 24.

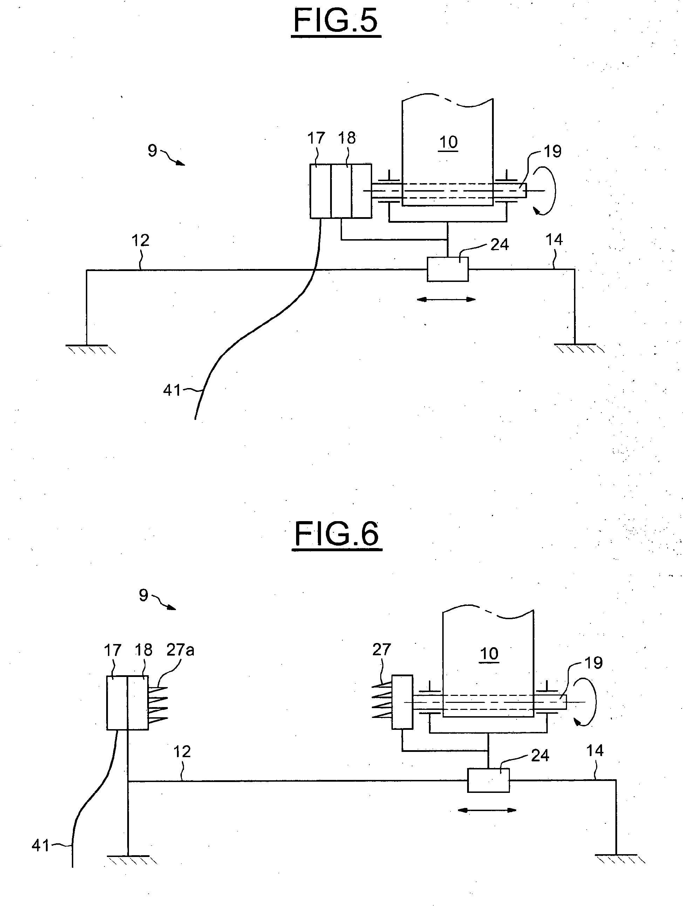

Comme illustré sur la figure 5, le deuxième mode de réalisation du prétensionneur 9 diffère du premier mode de réalisation par le fait que le support 20 est monté rigidement sur la bague de guidage 24 et par le fait que la tige de guidage 11 est équipée, par exemple de cannelures longitudinales (non représentées), ou de tout autre moyen, coopérant avec des formes complémentaires dans la bague de guidage 24. Dans ce deuxième mode de réalisation, lorsque l'occupant du siège avant 2 tire la boucle d'attache 16, le prétensionneur 9 est entraîné vers l'extrémité avant 12. Cependant, le sous-ensemble 25 reste en permanence vertical au dessus de la tige de guidage 11. Ce deuxième mode de réalisation présente l'avantage que le sous-ensemble 25 n'a pas tendance à se coucher sur les côtés du véhicule dans le cas où la sangle ventrale 8 est insuffisamment tendue par l'occupant du siège avant 2. Le fait que le sous-ensemble 25 reste sensiblement vertical permet d'éviter que le prétensionneur 9 doive générer une rotation nécessaire pour redresser le sous-ensemble 25.

Comme illustré en figure 6, le troisième mode de réalisation diffère du deuxième mode précédemment décrit par le fait que le générateur d'impulsion de rotation 18 est disposé à une extrémité avant de la tige de guidage fixe 11. L'arbre d'entraînement 19 est équipé d'un moyen de crantage 27. Grâce aux cannelures longitudinales ou aux moyens analogues prévus entre la bague 24 et la tige de guidage 11, le moyen de crantage 27 s'accouple avec un moyen de crantage complémentaire 27a monté sur le générateur commandable d'impulsion de rotation 18 lorsque la bague de guidage 24 et le sous-ensemble 25 sont amenés en position extrême avant 12. Les crans 27 et 27a présentent des faces parallèles à l'axe de rotation de l'arbre d'enroulement 19. Aussi, l'impulsion de couple de rotation est transmise intégralement à l'arbre 19 dans le sens de l'enroulement de la portion d'extrémité 10. Ce troisième mode de réalisation présente l'avantage d'éviter que le fil d'alimentation 41 du générateur commandable d'impulsion de rotation 18 ne soit flottant. De plus, le prétensionnement de la sangle ventrale 8 générée par le générateur 18 est immédiatement relâché dès qu'on retire vers l'arrière la bague de guidage 24 et le sous-ensemble 25. Cela facilite la libération des passagers arrière après l'accident.

Dans les deuxième et troisième modes de réalisation, la zone d'attache 26 sur l'arbre d'entraînement 19 ainsi que l'ensemble constitué par la bague de guidage 24 et le sous-ensemble 25, constituent un moyen 24-25-26 de guidage en translation pure de la portion d'extrémité. 10 le long de la tige de guidage 11. La distance radiale séparant la tige de guidage de la portion d'extrémité de la sangle ventrale 8 lorsque le générateur d'impulsion de rotation 18 n'est pas actionné, est constante. Donc le moyen de guidage en translation 24-25-26 est bien apte à limiter ladite distance radiale. De plus, le support 20 étant fixe par rapport à la bague de guidage 24, constitue un moyen d'immobilisation en translation de l'arbre d'enroulement 19 par rapport à la bague de guidage 24.

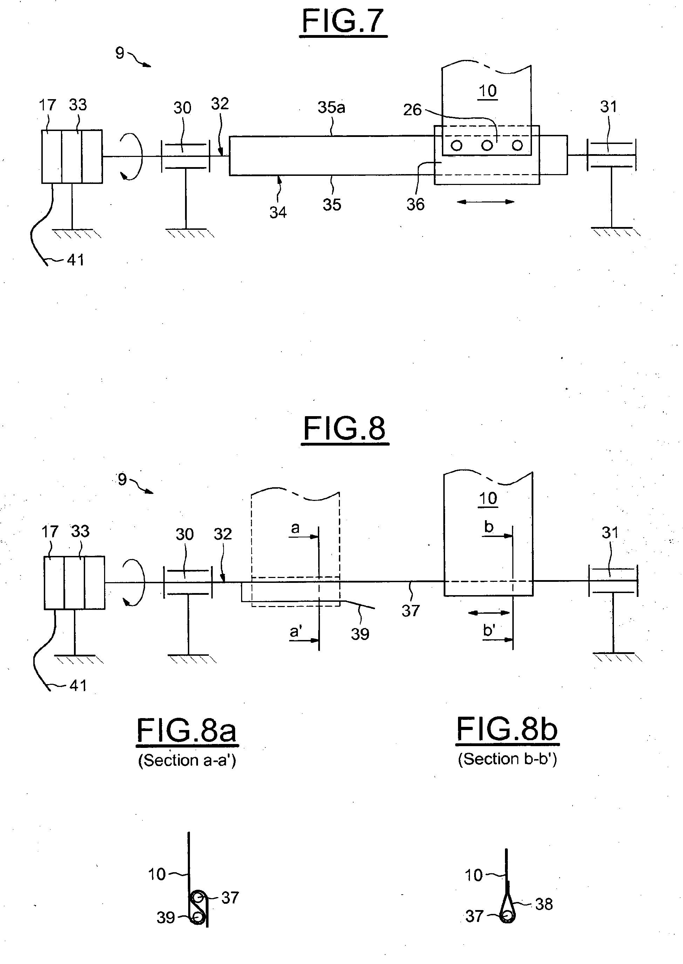

Les quatrième, cinquième et sixième modes de réalisation illustrés respectivement aux figures 7, 8 et 9 comprennent un palier avant 30, un palier arrière 31 sur lesquels est monté à rotation un équipage de guidage mobile 32 entraîné en rotation par un générateur d'impulsion de rotation 33 monté fixe par rapport au véhicule 1 et commandé par une unité de commande 17.

Comme illustré en figure 7, l'équipage de guidage 32 du quatrième mode de réalisation comprend un ensemble monobloc 34 de deux tiges de guidage parallèles 35 et 35a et une bague d'accrochage 36 munie de deux alésages parallèles coulissant le long des tiges parallèles 35 et 35a. La portion d'extrémité 10 de la sangle ventrale 8 est attachée à la bague d'accrochage 36 par une zone d'attache 26. Cette zone d'attache 26 et la bague d'accrochage 36 constituent un moyen 26-36 de guidage en translation pure de la portion d'extrémité 10 le long de la tige de guidage 35. La distance radiale séparant la tige de guidage 35 de la portion d'extrémité 10 de la sangle ventrale 8 est constante lorsque le générateur d'impulsion de rotation 33 n'est pas actionné. Les paliers avant et arrière 30 et 31 constituent des moyens d'immobilisation en translation de la tige de guidage 35 par rapport au véhicule 1.

Comme illustré en figure 8, l'équipage de guidage 32 mobile du cinquième mode de réalisation comprend une tige de guidage 37 alignée avec l'axe de rotation des paliers avant et arrière 30, 31 et comprend également un doigt d'enroulement 39 s'étendant parallèlement à la tige de guidage 37 et fixé à une extrémité avant de la tige de guidage 37 dans une position angulaire verticalement en dessous de la tige de guidage 37 lorsque le générateur d'impulsion de rotation 33 n'est pas activé. La portion d'extrémité 10 de la sangle ventrale 8 comprend également une boucle 38 (figure 8b) entourant la tige de guidage 37. La boucle 38 constitue un moyen de guidage en translation de ladite portion d'extrémité 10 de la sangle ventrale 8 le long de la tige de guidage 37. De plus, la boucle 38 est un moyen de guidage en translation de la portion d'extrémité 10 le long de la tige de guidage 37. La distance radiale séparant la tige de guidage 37 de la portion d'extrémité 10 de la sangle ventrale 8, est constante lorsque le générateur d'impulsion 33 n'est pas activé. Lorsque l'occupant du siège avant 2 veut encliqueter le système de ceinture de sécurité 4, la boucle 38 de la sangle ventrale 8 est amenée entre la tige de guidage 37 et le doigt d'enroulement 39. En cas d'accident, le générateur d'impulsion de rotation 33 provoque une rotation du doigt d'enroulement 39 autour de la tige de guidage 37 comme illustré en figure 8a.

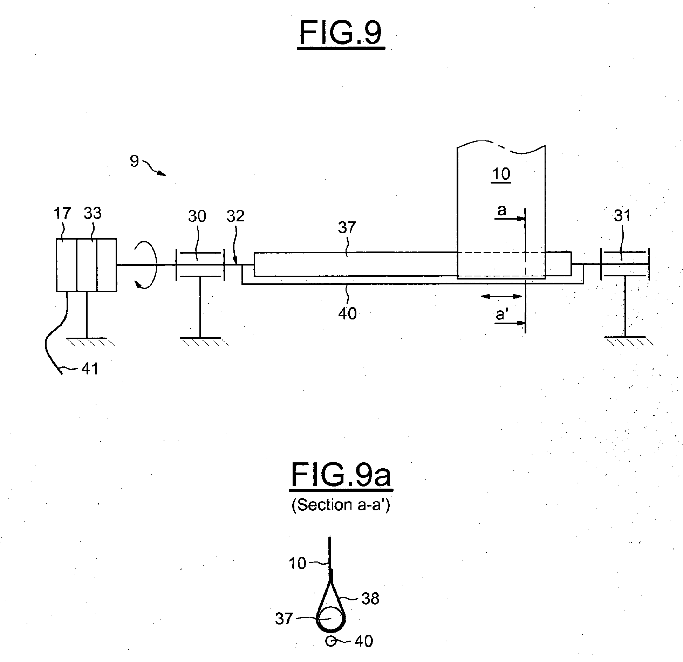

Comme illustré en figure 9, le sixième mode de réalisation du prétensionneur 9 diffère du cinquième mode de réalisation en ce que l'équipage de guidage mobile 32 comprend, en plus de la tige de guidage 37, une tige d'enroulement 40 s'étendant parallèlement à la tige de guidage 37 sur toute la course de coulissement de la boucle 38 (figure 9a). Lorsque le générateur d'impulsion de rotation 33 n'est pas activé, la tige d'enroulement 40 est située en dessous de la tige de guidage 37. Ce sixième mode de réalisation présente l'avantage que le prétensionnement est toujours possible même si l'occupant du siège n'a pas tiré la portion d'extrémité 10 de la sangle ventrale 8 vers l'avant de la tige de guidage 37.

## Revendications

1. Prétensionneur (9) pour ceinture de sécurité (4) de véhicule automobile (1), comprenant une portion (10) de sangle, un moyen d'enroulement de la portion de sangle autour d'un arbre d'enroulement (19, 36, 39, 40) et un générateur (18, 33) commandable d'impulsion de rotation de l'arbre d'enroulement (19, 36, 39, 40), **caractérisé par le fait que** ladite portion de sangle est une portion d'extrémité (10) d'une sangle ventrale (8) de la ceinture de sécurité (4) à prétensionner et qu'il comprend une tige de guidage (11, 35, 37), un moyen d'immobilisation en translation (12a-14a ; 30-31) de la tige de guidage (11, 35, 37) par rapport au véhicule (1) et un moyen de guidage en translation (24-20-26 ; 24-25-26 ; 36-26 ; 38) de ladite portion d'extrémité (10) de la sangle ventrale (8) le long de la tige de guidage (11, 35, 37), ledit moyen de guidage en translation étant apte à limiter la distance radiale séparant la tige de guidage (11, 35, 37) de la portion d'extrémité (10) de la sangle ventrale lorsque le générateur d'impulsion de rotation (18, 33) n'est pas activé.

2. Prétensionneur selon la revendication 1, dans lequel le générateur commandable d'impulsion de rotation (18, 33) comprend une unité de commande (17) et un dispositif pyrotechnique d'entraînement en rotation.

3. Prétensionneur selon la revendication 1 ou 2, dans lequel le générateur commandable d'impulsion de rotation (18) est mobile par rapport au véhicule (1).

4. Prétensionneur selon la revendication 3, comprenant une bague de guidage (24) mobile en translation le long de la tige de guidage (11) et un moyen d'immobilisation en translation (20-23 ; 10) de l'arbre d'enroulement (19) par rapport à la bague de guidage (24).

5. Prétensionneur selon la revendication 4, dans lequel la bague de guidage (24) est libre en rotation autour de la tige de guidage (11).

6. Prétensionneur selon la revendication 4 ou 5, comprenant un support (20) dans lequel est monté à rotation l'arbre d'enroulement (19) ; ledit support (20) étant lui-même monté à rotation sur des ergots latéraux (23) de la bague de guidage (24).

7. Prétensionneur selon la revendication 4, dans lequel la tige de guidage (11) est fixe par rapport au véhicule (1) et présente des moyens tels que des cannelures longitudinales coopérant avec des formes correspondantes de la bague de guidage (24).

8. Prétensionneur selon la revendication 1 ou 2, dans lequel le générateur commandable d'impulsion de rotation (33) est fixe par rapport au véhicule (1).

9. Prétensionneur selon les revendications 7 et 8 prises dans leur ensemble, comprenant un moyen de crantage (27) disposé en extrémité de l'arbre d'enroulement (19), apte à s'accoupler avec le générateur d'impulsion de rotation (18) lorsque la bague de guidage (24) est située à une extrémité avant de la tige de guidage (11).

10. Prétensionneur selon la revendication 8, comprenant un ensemble monobloc (34) de deux tiges de guidage parallèles (35, 35a), et une bague d'accrochage (36) de la portion d'extrémité (10) de la sangle ventrale (8), la bague d'accrochage (36) coulissant le long dudit ensemble (34).

11. Prétensionneur selon la revendication 8, dans lequel la tige de guidage (37) est montée à rotation sur des paliers (30, 31) fixés au véhicule (1), la tige de guidage (37) étant entraînée en rotation par le générateur d'impulsion de rotation (33), la portion d'extrémité (10) de la sangle ventrale (8) présentant une boucle (38) apte à coulisser latéralement le long de la tige de guidage (37).

12. Prétensionneur selon la revendication 11, comprenant un doigt d'enroulement (39) s'étendant parallèlement à la tige de guidage (37) et fixé à une extrémité avant de ladite tige de guidage (37).

13. Prétensionneur selon la revendication 11, comprenant une tige d'enroulement (40) fixée à la tige de guidage (37) et s'étendant parallèlement à la tige de guidage (37) sur toute la course de coulissement de la boucle (38) de la sangle ventrale (8) le long de la tige de guidage (37).

14. Système de ceinture de sécurité (4) comprenant un prétensionneur (9) selon l'une des revendications précédentes, et un enrouleur (5) fixé au véhicule (1) destiné à enrouler l'extrémité de la ceinture de sécurité opposé à ladite extrémité (10) de la sangle ventrale (8) de la ceinture (4).

## Patentansprüche

1. Vorspanner (9) für Sicherheitsgurt (4) eines Kraftfahrzeugs (1), der einen Gurtabschnitt (10), ein Aufrollmittel des Gurtabschnitts um eine Aufrollwelle (19, 36, 39, 40) und einen steuerbaren Rotationsimpulsgenerator (18, 33) der Aufrollwelle (19, 36, 39, 40) umfasst, **dadurch gekennzeichnet, dass** der Gurtabschnitt ein Endabschnitt (10) eines Beckengurts (8) des Sicherheitsgurts (4), der vorzuspannen ist, ist, und dass er einen Führungsschaft (11, 35, 37), ein Mittel zum Stillstellen in Verschiebung (12a-14a; 30-31) des Führungsschafts (11, 35, 37) in Bezug auf das Fahrzeug (1) und ein Mittel zum Führen in Verschiebung (24-20-26; 24-25-26; 36-26; 38) des Endabschnitts (10) des Bauchgurts (8) entlang des Führungsschafts (11, 35, 37) umfasst, wobei das Mittel zum Führen in Verschiebung geeignet ist, um die radiale Entfernung, die den Führungsschaft (11, 35, 37) von dem Endabschnitt (10) des Beckengurts trennt, wenn der Rotationsimpulsgenerator (18, 33) nicht aktiviert ist, einzuschränken.

2. Vorspanner nach Anspruch 1, bei dem der steuerbare Rotationsimpulsgenerator (18, 33) eine Steuereinheit (17) und eine pyrotechnische Vorrichtung zum Antreiben in Drehung aufweist.

3. Vorspanner nach Anspruch 1 oder 2, bei dem der steuerbare Rotationsimpulsgenerator (18) in Bezug auf das Fahrzeug (1) beweglich ist.

4. Vorspanner nach Anspruch 3, der einen Führungsring (24) umfasst, der in Verschiebung entlang des Führungsschafts (11) beweglich ist, und ein Mittel zum Stillstellen in Verschiebung (20-23; 10) der Aufrollwelle (19) in Bezug auf den Führungsring (24).

5. Vorspanner nach Anspruch 4, bei dem der Führungsring (24) in Drehung um den Führungsschaft (11) frei ist.

6. Vorspanner nach Anspruch 4 oder 5, der einen Träger (20) umfasst, in dem die Aufrollwelle (19) drehend montiert ist, wobei der Träger (20) selbst drehend auf seitlichen Dornen (23) des Führungsrings (24) montiert ist.

7. Vorspanner nach Anspruch 4, bei dem der Führungsschaft (11) in Bezug auf das Fahrzeug (1) stationär ist und Mittel, wie zum Beispiel Längsnuten aufweist, die mit entsprechenden Formen des Führungsrings (24) zusammenwirken.

8. Vorspanner nach Anspruch 1 oder 2, bei dem der steuerbare Rotationsimpulsgenerator (33) in Bezug auf das Fahrzeug (1) stationär ist.

9. Vorspanner nach den Ansprüchen 7 und 8 gemeinsam genommen, der ein Verzahnungsmittel (27) umfasst, das am Ende der Aufrollwelle (19) angeordnet ist, das geeignet ist, mit dem Rotationsimpulsgenerator (18) zu koppeln, wenn sich der Führungsring (24) an einem vorderen Ende des Führungsschafts (11) befindet.

10. Vorspanner nach Anspruch 8, der eine einteilige Baugruppe (34) aus zwei parallelen Führungsschäften (35, 35a) und einen Anhängring (36) des Endabschnitts (10) des Beckengurts (8) umfasst, wobei der Anhängring (36) entlang der Baugruppe (34) gleitet.

11. Vorspanner nach Anspruch 8, bei dem der Führungsschaft (37) drehend auf Lagern (30, 31), die an dem Fahrzeug (1) befestigt sind, montiert ist, wobei der Führungsschaft (37) in Drehung von dem Rotationsimpulsgenerator (33) angetrieben wird, wobei der Endabschnitt (10) des Beckengurts (8) eine Schleife (38) aufweist, die entlang des Führungsschafts (37) gleiten kann.

12. Vorspanner nach Anspruch 11, der einen Aufrollfinger (39) umfasst, der sich parallel zu dem Führungsschaft (37) erstreckt und an einem vorderen Ende des Führungsschafts (37) befestigt ist.

13. Vorspanner nach Anspruch 11, der einen Aufrollschaft (40) umfasst, der an dem Führungsschaft (37) befestigt ist und sich parallel zu dem Führungsschaft (37) auf dem gesamten Gleitweg der Schleife (38) des Beckengurts (8) entlang des Führungsschafts (37) erstreckt.

14. Sicherheitsgurtsystem (4), das einen Vorspanner (9) nach einem der vorhergehenden Ansprüche und einen Aufroller (5), der an dem Fahrzeug (1) befestigt ist, umfasst, der dazu bestimmt ist, das Ende des Sicherheitsgurts, das dem Ende (10) des Beckengurts (8) des Gurts (4) gegenüberliegt, aufzurollen.

## Claims

1. Pretensioner (9) for a seat belt (4) of a motor vehicle (1), comprising a strap portion (10), a means for winding the strap portion around a winding shaft (19, 36, 39, 40) and a controllable rotation pulse generator (18, 33) for the winding shaft (19, 36, 39, 40), **characterized in that** the said strap portion is an end portion (10) of a ventral strap (8) of the seat belt (4) to be pretensioned and **in that** it comprises a guide rod (11, 35, 37), a means (12a-14a; 30-31) for translationally immobilizing the guide rod (11, 35, 37) with respect to a vehicle (1) and a means (24-20-26; 24-25-26; 36-26; 38) for translationally guiding the said end portion (10) of the ventral strap (8) along the guide rod (11, 35, 37), the said translation guiding means being able to limit the radial distance separating the guide rod (11, 35, 37) from the end portion (10) of the ventral strap when the rotation pulse generator (18, 33) is not activated.

2. Pretensioner according to Claim 1, in which the controllable rotation pulse generator (18, 33) comprises a control unit (17) and a pyrotechnic device for driving in rotation.

3. Pretensioner according to Claim 1 or 2, in which the controllable rotation pulse generator (18) is moveable with respect to the vehicle (1).

4. Pretensioner according to Claim 3, comprising a guide ring (24) which is translationally moveable along the guide rod (11) and a means (20-23; 10) for translationally immobilizing the winding shaft (19) with respect to the guide ring (24).

5. Pretensioner according to Claim 4, in which the guide ring (24) is free to rotate around the guide rod (11).

6. Pretensioner according to Claim 4 or 5, comprising a support (20) in which the winding shaft (19) is rotatably mounted, the said support (20) itself being rotatably mounted on lateral lugs (23) of the guide ring (24).

7. Pretensioner according to Claim 4, in which the guide rod (11) is fixed with respect to the vehicle (1) and has means such as longitudinal splines cooperating with corresponding shapes of the guide ring (24).

8. Pretensioner according to Claim 1 or 2, in which the controllable rotation pulse generator (33) is fixed with respect to the vehicle (1).

9. Pretensioner according to Claims 7 and 8 taken together, comprising a latching means (27) arranged at the end of the winding shaft (19) and able to be coupled with the rotation pulse generator (18) when the guide ring (24) is situated at a front end of the guide rod (11).

10. Pretensioner according to Claim 8, comprising a monobloc assembly (34) of two parallel guide rods (35, 35a), and an attachment ring (36) for the end portion (10) of the ventral strap (8), the attachment ring (36) sliding along the said assembly (34).

11. Pretensioner according to Claim 8, in which the guide rod (37) is rotatably mounted on bearings (30, 31) fixed to the vehicle (1), the guide rod (37) being rotated by the rotation pulse generator (33), the end portion (10) of the ventral strap (8) having a loop (38) able to slide laterally along the guide rod (37).

12. Pretensioner according to Claim 11, comprising a winding finger (39) extending parallel to the guide rod (37) and fixed to a front end of the said guide rod (37).

13. Pretensioner according to Claim 11, comprising a winding rod (40) fixed to the guide rod (37) and extending parallel to the guide rod (37) over the entire sliding travel of the loop (38) of the ventral strap (8) along the guide rod (37).

14. Seat belt (4) system comprising a pretensioner (9) according to one of the preceding claims, and a winder (5) fixed to the vehicle (1) intended to wind the end of the seat belt that is opposed to the said end (10) of the ventral strap (8) of the belt (4).
